# EUROPÄISCHE PATENTSCHRIFT

(11) **EP 2 809 474 B1**
(45) Veröffentlichungstag und Bekanntmachung des Hinweises auf die Patenterteilung: **08.04.2020**
(21) Anmeldenummer: 13703326.2
(22) Anmeldetag: 29.01.2013
(51) Int. Cl.: B23K 20/12

(54) **VORRICHTUNG ZUM REIBAUFTRAGSBESCHICHTEN EINER OBERFLÄCHE EINES WERKSTÜCKS**
DEVICE FOR THE FRICTION-COATING OF A SURFACE OF A WORKPIECE
DISPOSITIF D'APPLICATION D'UN REVÊTEMENT DE FRICTION SUR LA SURFACE D'UNE PIÈCE

(30) Priorität: 31.01.2012 DE 102012001779
(43) Veröffentlichungstag der Anmeldung: 10.12.2014
(73) Patentinhaber: Hochschule Für Angewandte Wissenschaften - Fachhochschule Kempten, 87435 Kempten (DE)
(72) Erfinder: SCHINDELE, Paul, Prof. Dr.-Ing., 87439 Kempten (DE)
(74) Vertreter: Hoefer & Partner Patentanwälte mbB
(86) Internationale Anmeldenummer: PCT/EP2013/000268
(87) Internationale Veröffentlichungsnummer: WO 2013/113492

(56) Entgegenhaltungen:
- EP-A1- 0 434 430
- US-A1- 2010 147 925
- KRAMER DE MACEDO M L ET AL: "Deposit by friction surfacing and its applications", WELDING INTERNATIONAL, TAYLOR & FRANCIS, ABINGDON, GB, Bd. 24, Nr. 6, 1. Juni 2010 (2010-06-01), Seiten 422-431, XP001554113, ISSN: 0950-7116, DOI: 10.1080/09507110902844535

## Beschreibung

Die Erfindung bezieht sich auf eine Vorrichtung zum Reibauftragsbeschichten einer Oberfläche eines Werkstücks.

Beim Reibbeschichten und Reibauftragsschweißen wird ein rotierendes, meist stabförmiges Beschichtungsmaterial (Auftragselement) eingesetzt, das um seine eigene Achse dreht. Dabei tritt das Problem auf, dass im Bereich der Drehachse des Auftragselements eine Relativgeschwindigkeit gegenüber dem zu beschichtenden Werkstück von 0 auftritt, die mit zunehmendem Abstand zur Mitte und damit zur Drehachse des Auftragselement ansteigt und am Außenrand des Auftragselements ihr Maximum erreicht. Dadurch entsteht über den Querschnitt des rotierenden Auftragselements eine ungleichmäßige Erwärmung durch die Reibung zwischen dem Auftragselement und dem Werkstück und damit eine ungleichmäßige Erweichung über den Querschnitt des Auftragselements.

Außerdem muss das Auftragselement ausgetauscht werden sobald es durch den Auftragsvorgang bis auf einen Rest, der zur Einspannung dient, verbraucht ist. Dadurch kommt es zu einer Unterbrechung des Beschichtungsvorganges, die einen kontinuierlichen oder länger andauernden Auftragsprozess verhindert.

EP 0 434 430 A1 zeigt eine Vorrichtung nach dem Oberbegriff des Anspruchs 1.

Der Erfindung liegt die Aufgabe zugrunde, eine Vorrichtung der eingangs genannten Art zu schaffen, welche eine verbesserte Beschichtungsqualität schaffen und bei denen eine kontinuierliche oder semi-kontinuierliche Zustellung des Auftragselements (Beschichtungsmaterials) möglich ist.

Erfindungsgemäß wird die Aufgabe durch die Merkmalskombination des unabhängigen Anspruchs gelöst, die Unteransprüche zeigen weitere vorteilhafte Ausgestaltungen der Erfindung.

Hinsichtlich eines Verfahrens, welches keinen Teil der Erfindung darstellt, ist es vorgesehen, dass ein Auftragselement, welches in Kontakt mit der Oberfläche des Werkstücks gebracht und relativ zu dieser bewegt wird, an bzw. in einem um eine Drehachse rotierbaren Lagerelement gelagert ist, wobei das Auftragselement auf einer Kreisbahn um die Drehachse des Lagerelements bewegt wird.

Demnach wird somit das Auftragselement, welches drahtförmig ausgebildet ist, auf einer Kreisbahn bewegt. Durch eine Längsbewegung längs der Oberfläche des Werkstücks kann somit ein streifenförmiger Bereich der Oberfläche des Werkstücks mit dem Material des Auftragselements beschichtet werden, um eine Auftragsschicht zu bilden oder um eine Verschweißung vorzunehmen. Durch die dabei auftretende Reibungswärme wird das Auftragselement plastifiziert und kann durch Druckaufbringung auf die Oberfläche übertragen werden. Zusätzlich ist es möglich, weitere Wärmequellen entweder zum Erwärmen des Werkstücks bzw. der Werkstückoberfläche und/oder des Auftragselements selbst zu verwenden.

Somit wird das drahtförmige Auftragsmaterial, nicht wie aus dem Stand der Technik bekannt, zentrisch in eine rotierende Spanneinrichtung aufgenommen, sondern mit einem wählbaren exzentrischen Versatz in einer Hülse eines Lagerelements derart befestigt, dass es über eine Vorschubeinrichtung oder Zustelleinrichtung aus der rotierenden Hülse geschoben werden kann. Durch diese Anordnung beschreibt das drahtförmige Auftragselement mit seiner Stirnseite eine Kreisbewegung um die zentrische Achse des Lagerelements, deren Durchmesser über die Exzentrizität der Aufnahme eingestellt werden kann. Das Auftragselement kann bevorzugt über eine pneumatische, mechanische oder hydraulische Vorschubeinrichtung oder Zustelleinrichtung auf das Werkstück gepresst werden, wodurch der Reibauftrag erfolgt und der Abtrag des Beschichtungsmaterials (Auftragsmaterials) ausgeglichen wird, bis das Auftragselement verbraucht ist.

Um somit einen kontinuierlichen Beschichtungsvorgang realisieren zu können, ist es besonders vorteilhaft, wenn das Auftragselement mittels einer Vorschubbewegung in Richtung auf die Oberfläche des Werkstücks bewegt wird. Der Betrag des Vorschubs oder der Zustellung kann in einfacher Weise an die jeweiligen Arbeitsbedingungen angepasst werden.

Das Auftragselement kann entweder mit dem Lagerelement ohne eine Relativbewegung bewegt/gedreht werden oder relativ zu einem Maschinengestell still stehen und somit um seine Längsachse relativ zu dem Lagerelement drehen.

Hinsichtlich der erfindungsgemäßen Vorrichtung nach Anspruch 1 ist vorgesehen, dass die Vorrichtung ein Maschinengestell umfasst, an welchem um eine Drehachse rotierbar ein Lagerelement gelagert ist, welches relativ zu dem an dem Maschinengestell gelagerten Werkstück bewegbar ist, wobei an dem Lagerelement exzentrisch zu dessen Drehachse ein Auftragselement angeordnet ist, welches entlang der Oberfläche des Werkstücks bewegbar ist.

Offenbart ist eine Vorrichtung zum Reibbeschichten der Oberfläche eines Werkstücks bzw. zum Fügen von Werkstücken mittels eines Reibauftragsschweißverfahrens, umfassend eine Aufnahme zum Aufnehmen eines Beschichtungselements bzw. eines Fügeelements, wobei die Aufnahme um ihre Längsachse (Rotationsachse) rotierbar ist und wobei die Aufnahme derart ausgebildet ist, dass das Beschichtungselement bzw. das Fügeelement im von der Aufnahme aufgenommenen Zustand im Wesentlichen parallel und um einen veränderbaren exzentrischen Versatz zur Rotationsachse der Aufnahme angeordnet ist, so dass das Beschichtungselement bzw. das Fügeelement bei Rotation der Aufnahme um ihre Rotationsachse eine Kreisbahn um die Rotationsachse der Aufnahme beschreibt, deren Radius über den veränderbaren exzentrischen Versatz einstellbar ist, eine Antriebseinheit zum Vermitteln der Rotation der Aufnahme, eine vorzugsweise pneumatische, mechanische oder hydraulische Fördereinrichtung zum Fördern des Beschichtungselements bzw. des Fügeelements in Richtung der zu beschichtenden Oberfläche des Werkstücks bzw. der zu fügenden Werkstücke und/oder zum Beaufschlagen des Beschichtungselements bzw. des Fügeelements mit einem Druck bzw. einer Anpresskraft gegenüber der zu beschichtenden Oberfläche des Werkstücks bzw. der zu fügenden Werkstücke und eine Bevorratung für ein im Wesentlichen strangförmiges Beschichtungselement bzw. Fügeelement. In einer bevorzugten Ausführungsform ist die Aufnahme ausgebildet, um zusätzlich zum Beschichtungselement bzw. Fügeelement ein gegenüber diesem um einen Winkel (Umfangswinkel) versetzt angeordnetes Reibelement aufzunehmen.

Um eine kontinuierliche oder semi-kontinuierliche Zuführung des Materials des Auftragselements, welches drahtförmig ausgebildet ist, zu ermöglichen, ist es besonders günstig, wenn das Auftragselement längs verschiebbar an dem Lagerelement gehaltert ist. Diese Lagerung und/oder Halterung erfolgt dabei bevorzugterweise reibungsarm mittels eines Gleitlagers, eines Wälzlagers oder einer Lagerhülse.

Um eine Zuführung des Auftragsmaterials (Auftragselements) für einen längeren Beschichtungsvorgang zur ermöglichen, wird es von einer größeren Drahtrolle abgewickelt, gerade gerichtet und dann kontinuierlich nachgeführt.

Dabei wird das Auftragsmaterial (Auftragselement) in Form eines Drahtes bevorzugt durch eine exzentrische Bohrung der rotierenden Spannhülse (Lagerelement) zugeführt. Die Zuführung erfolgt vorzugsweise über einen Reibradantrieb, wie er als Vorschub für Schweißdrähte bekannt ist. In der Bohrung, durch die der Draht geführt wird, sind Wälz- oder Gleitlager eingebaut, die die Reibung des Drahtes an der Bohrungswand reduzieren. Der Draht steht somit relativ zu dem Maschinengestell still und dreht sich in dem Lagerelement. Der Draht ragt beim Beschichtungsvorgang aus dem Lagerelement heraus und wird gegen die Werkstückoberfläche gepresst. Dabei übernimmt das Lagerelement auch eine Stützfunktion für den Draht, so dass er nicht durch die Reibkräfte abgeknickt wird.

Das Auftragselement (Auftragsmaterial) kann in Form eines exzentrisch angebrachten Blockes oder Stabes auf das in Form einer Scheibe ausgebildete Lagerelement gespannt, die beim Reibauftrag rotiert und gegen die Werkstückoberfläche gepresst wird. Mit dieser Anordnung kann je nach Größe des Beschichtungsblockes eine große Fläche in einer Umdrehung beschichtet werden.

Um die Oberfläche des Werkstückes vorzuwärmen, von Oxidschichten zu befreien und/oder aufzurauen, kann es vorteilhaft sein, dass dies über ein Reibelement vorgenommen wird, das als Stab oder Klotz um einen Winkel gegenüber dem Auftragselement versetzt aus dem rotierenden Lagerelement bzw. einer an diesem gelagerten Spannhülse herausragt und auf der Oberfläche des Werkstückes reibt. Sobald die Oberfläche des Werkstückes genügend erwärmt ist, wird das Reibelement manuell oder über eine separate Hubeinheit zurückgezogen und das Auftragselement (Beschichtungswerkstoff) auf die Oberfläche des Werkstückes gepresst, so dass Material aufgetragen wird.

Soll die Beschichtung auf eine bestimmte Dicke begrenzt werden, so kann das Auftragselement mit einem einstellbaren Abstand aus der Spannhülse herausragen und das zu dick aufgetragene Material im noch weichen Zustand so ebnen und glätten, so dass eine genau einstellbare Schichtdicke erzeugt werden kann.

Der Vorschub des sich verbrauchenden Beschichtungsklotzes kann wie beim stabförmigen Auftragselement erfolgen.

Im Folgenden wird die Erfindung anhand von Ausführungsbeispielen in Verbindung mit der Zeichnung beschrieben. Dabei zeigt:
- Fig. 1: eine schematische Schnittansicht eines ersten Ausführungsbeispiels der Erfindung mit Detail A,
- Fig. 2: eine perspektivische Ansicht des in Fig. 1 gezeigten Ausführungsbeispiels,
- Fig. 3: eine vereinfachte Teil-Schnittansicht eines weiteren Ausführungsbeispiels der Erfindung,
- Fig. 4: eine perspektivische Ansicht der in Fig. 3 gezeigten Anordnung,
- Fig. 5: eine perspektivische Teil-Ansicht des Ausführungsbeispiels der Fig. 3 und 4,
- Fig. 6: eine Schnittansicht eines nicht erfindungsgemäßen Beispiels, und
- Fig. 7: eine perspektivische Darstellung des Beispiels der Fig. 6.

Bei den unterschiedlichen Ausführungsbeispielen werden gleiche Teile mit gleichen Bezugsziffern versehen.

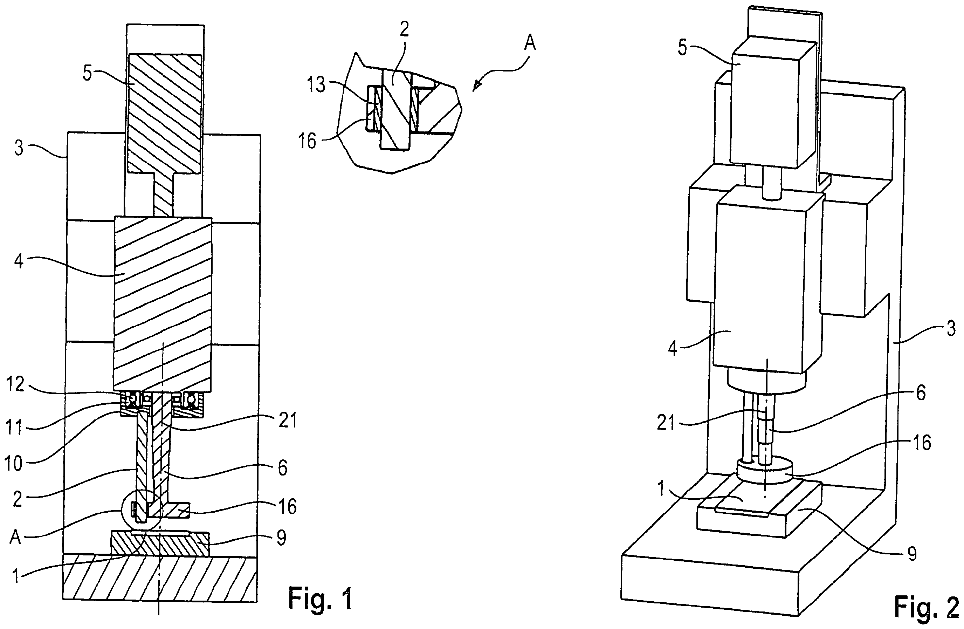

Die Fig. 1 und 2 zeigen ein erstes Ausführungsbeispiel. An einem Maschinengestell 3 ist ein Werkstück 1 angeordnet, welches beispielsweise in Form eines Substrats ausgebildet ist und dessen Oberfläche mit dem Material eines Auftragselements 2 zu beschichten ist. Das Werkstück 1 ist mittels einer Halterung 9 an dem Maschinengestell 3 gehaltert. Die Halterung 9 ist mittels einer nicht dargestellten Antriebsvorrichtung relativ zu dem Maschinengestell 3 bewegbar, um eine streifenförmige oder bahnförmige Beschichtung vornehmen zu können.

Die Fig. 1 und 2 zeigen ein Lagerelement 16, welches um eine Drehachse 21 rotierbar ist. Das Lagerelement 16 ist an seinem stirnseitigen Ende im Wesentlichen in Form einer Scheibe ausgebildet, welche mit einem Schaft 6 verbunden ist, welcher in nicht dargestellter Weise an dem Maschinengestell 3 mittels eines Antriebs drehbar gelagert ist.

Wie insbesondere in der Detaildarstellung der Fig. 1 ersichtlich, weist das Lagerelement 16 eine Ausnehmung auf, in welcher eine Gleitlagerbuchse 13 angeordnet ist, durch welche das drahtförmige Auftragselement 2 reibungsarm geführt ist.

Das Bezugszeichen 4 zeigt in schematischer Weise einen Antrieb mit einer Führung, welcher zur Rotation des Lagerelements 16 um die Drehachse 21 sowie zur Aufbringung einer Anpresskraft dient. Die Anpresskraft, mit der das Auftragselement 2 gegen die Oberfläche des Werkstücks 1 gedrückt wird, wird durch eine Druckeinrichtung 5 aufgebracht, welche beispielsweise in Form einer Kolben-Zylinder-Einheit ausgebildet ist.

Weiterhin zeigt die Fig. 1 eine Druckhülse 10, welche mittels eines Radial-Rillenkugellagers 11 und eines Axial-Rillenkugellagers 12 abgestützt und gelagert ist, um den Endbereich des Auftragselements 2 zu haltern und die Aufbringung einer Druckkraft parallel zur Drehachse 21 zu ermöglichen.

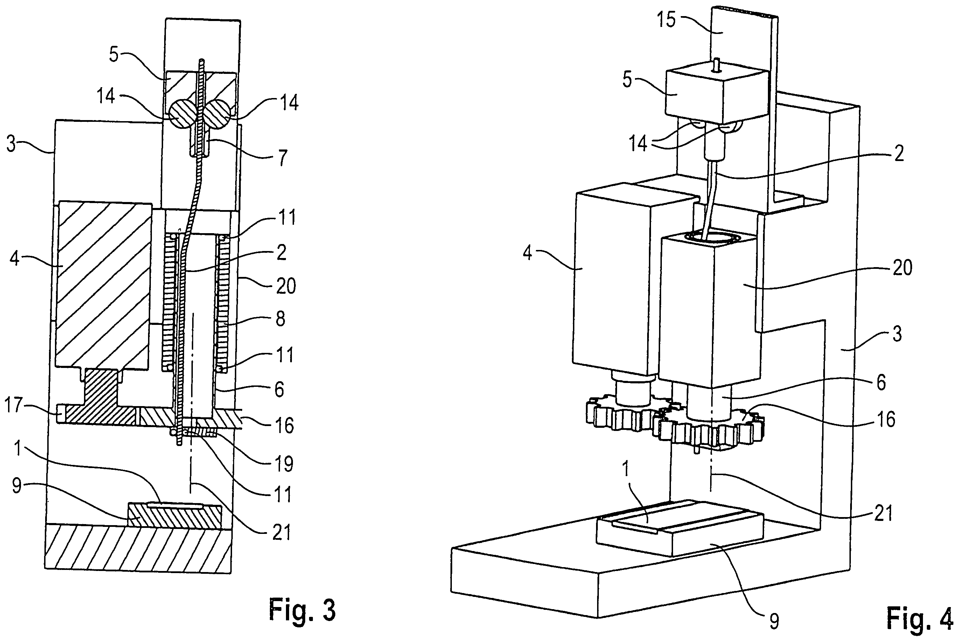

Die Fig. 3 bis 5 zeigen ein zweites Ausführungsbeispiel der Erfindung. Auf eine nochmalige Beschreibung der mit dem Ausführungsbeispiel der Fig. 1 und 2 übereinstimmenden Bauelemente wird verzichtet.

Bei dem Ausführungsbeispiel der Fig. 3 bis 5 ist das Lagerelement 16 in Form eines Zahnrades ausgebildet, welches mittels eines Antriebsrads 17, welches mit dem Lagerelement 16 kämmt, angetrieben wird. Der Antrieb 4 ist somit seitlich angeordnet, das Antriebsrad 17 rotiert um eine Drehachse, welche zur Drehachse 21 parallel ist.

An dem unteren Bereich des Lagerelements 16 ist eine Halterung 19 befestigt, welche verstellbar ist, um einen radialen Abstand des drahtförmigen Auftragselements 2 zu der Drehachse 21 einstellen oder verändern zu können. Somit ist es möglich, die Breite der Oberflächenbahn, welche durch das Auftragselement mit dem Material des Auftragselements beschichtet wird, einzustellen oder zu verändern.

Das Bezugszeichen 20 bezeichnet einen Lagerbock für das Lagerelement 16. Der Schaft 6 des Lagerelements 16 ist rohrförmig ausgebildet und ermöglicht die Durchführung des drahtförmigen Auftragselements 2, so wie dies in Fig. 3 dargestellt ist. Mittels der Druckeinrichtung 5 erfolgt die Aufbringung eines Anpressdrucks. Die Vorschubbewegung kann mittels Reibrädern 14 erfolgen. Die Abstützung an dem Maschinengestell 3 erfolgt mittels einer Führungsplatte 15. Ein Glättwerkzeug 7 dient dazu, den von einer nicht dargestellten Drahtrolle zugeführten Draht des Auftragselements 2 zu glätten. Die Halterung des Schaftes 6 und dessen Lagerung mittels der Lager 11 erfolgt über eine Halterung 8. Das drahtförmige Auftragselement 2 rotiert somit nicht um seine Längsachse, hat jedoch zu dem Lagerelement 16 eine Relativbewegung, da das Auftragselement zusammen mit dem Lagerelement um dessen Drehachse 21 rotiert.

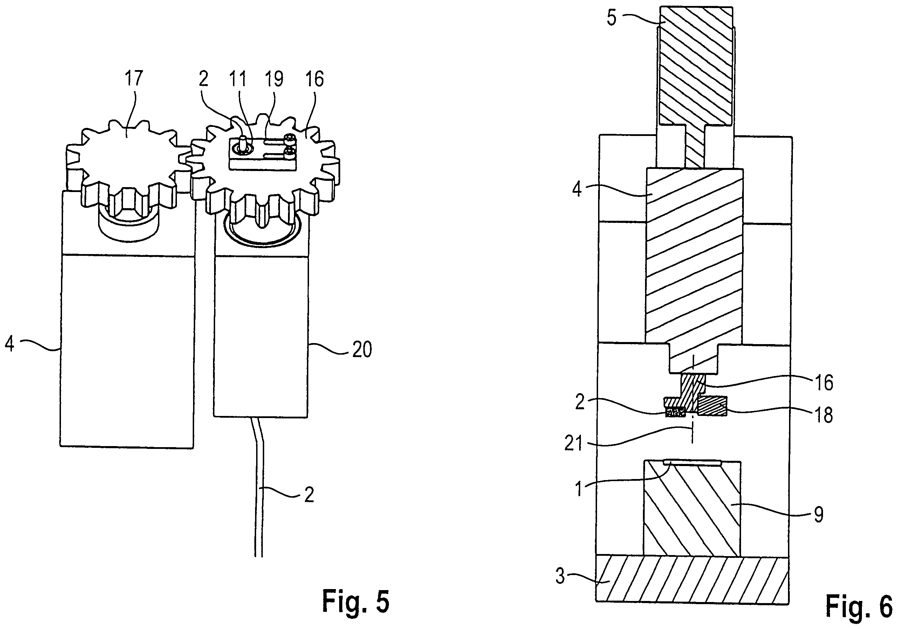

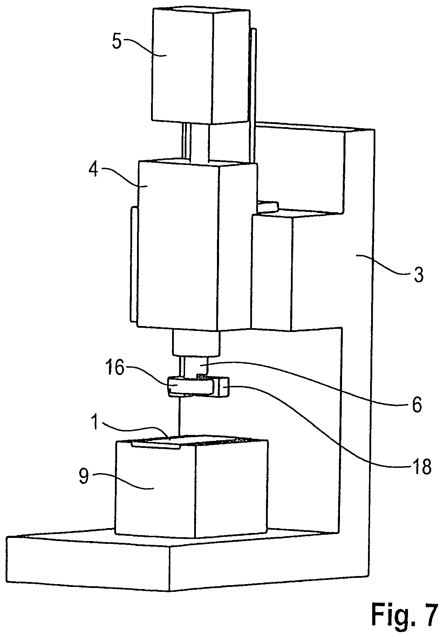

Die Fig. 6 und 7 zeigen ein nicht erfindungsgemäßes Beispiel. Bei diesem ist das Auftragselement 2 blockartig ausgebildet. An dem Lagerelement 16 ist versetzt und ebenfalls exzentrisch zur Drehachse 21 ein Werkzeug 18 befestigt, welches zur Glättung und/oder Oberflächenbearbeitung des Werkstücks 1 dienen kann, beispielsweise, um Oxidschichten zu beseitigen und/oder die durch das Auftragselement 2 aufgebrachte Materialschicht zu glätten. Das Werkzeug 16 kann wahlweise auch zur zusätzlichen Erwärmung der Oberfläche des Werkstücks verwendet werden. Die Fig. 6 und 7 zeigen das Beispiel in stark vereinfachter Ausgestaltungsform, es versteht sich, dass die Positionierung des Auftragselements 2 und des Werkzeugs 18 so erfolgen muss, dass diese selektiv oder gleichzeitig mit der Oberfläche des Werkstücks 1 in Kontakt bringbar sind.

### Bezuqszeichenliste

- 1: Werkstück
- 2: Auftragselement/Auftragsmaterial
- 3: Maschinengestell
- 4: Antrieb mit Führung
- 5: Druckeinrichtung
- 6: Schaft
- 7: Glättwerkzeug
- 8, 9: Halterung
- 10: Druckhülse
- 11: Radial-Rillenkugellager
- 12: Axial-Rillenkugellager
- 13: Gleitlagerbuchse
- 14: Reibrad
- 15: Führungsplatte
- 16: Lagerelement
- 17: Antriebsrad
- 18: Werkzeug
- 19: Halterung
- 20: Lagerbock für Lagerelement 16
- 21: Drehachse

## Patentansprüche

1. Vorrichtung zum Reibauftragsbeschichten einer Oberfläche eines Werkstücks (1), mit einem Maschinengestell (3), an welchem um eine Drehachse (21) rotierbar ein Lagerelement (16) gelagert ist, welches relativ zu dem an dem Maschinengestell (3) gelagerten Werkstück (1) bewegbar ist, wobei an dem Lagerelement (16) exzentrisch zu dessen Drehachse (21) ein aus einem Beschichtungsmaterial bestehendes Auftragselement (2) angeordnet ist, welches in Kontakt mit der Oberfläche des Werkstücks (1) bewegbar ist,
wobei das Auftragselement (2) drahtförmig ausgebildet ist und mittels einer Zustellvorrichtung längsverschiebbar an dem Lagerelement (16) gehaltert ist,
**dadurch gekennzeichnet, dass** das Auftragselement (2) auf einem mit dem Lagerelement (16) verbundenen Bevorratungselement in Form einer Drahtrolle, bevorratet ist und vorzugsweise kontinuierlich nachführbar ausgebildet ist.

2. Vorrichtung nach Anspruch 1, **dadurch gekennzeichnet, dass** das Lagerelement (16) und das Werkstück (1) in einer Längsrichtung des Werkstücks (1) relativ zueinander bewegbar sind und/oder dass das Lagerelement (16) und/oder das Auftragselement (2) in Richtung auf die Oberfläche des Werkstücks (1) bewegbar ist.

3. Vorrichtung nach einem der vorhergehenden Ansprüche, wobei das Lagerelement (16) und/oder das Auftragselement (2) mittels einer Druckeinrichtung (5) gegen das Werkstück (1) anpressbar sind.

4. Vorrichtung nach einem der vorhergehenden Ansprüche, wobei das Auftragselement (2) mittels einer Lagervorrichtung (11, 12, 13), insbesondere mittels eines Gleitlagers (13) oder Wälzlagers (11, 12) oder einer Lagerhülse (13) an dem Lagerelement (16) gelagert ist.

5. Vorrichtung nach einem der vorhergehenden Ansprüche, wobei das Auftragselement (2) an dem Lagerelement (16) radial verstellbar bezogen auf die Drehachse (21) angeordnet ist.

## Claims

1. Apparatus for friction coating a surface of a workpiece (1), comprising a machine frame (3) on which a bearing element (16) is rotatably mounted about an axis of rotation (21), which bearing element can be moved relative to the workpiece (1) mounted on the machine frame (3), an application element (2) consisting of a coating material being arranged on the bearing element (16) eccentrically with respect to the axis of rotation (21) thereof, which application element can be moved into contact with the surface of the workpiece (1),
the application element (2) being wire-shaped and being held on the bearing element (16) in a longitudinally displaceable manner by means of an advancing device, **characterized in that** the application element (2) is stored on a storage element in the form of a wire reel that is connected to the bearing element (16) and said application element is preferably designed such that it can be continuously fed.

2. Apparatus according to claim 1, **characterized in that** the bearing element (16) and the workpiece (1) can be moved relative to one another in a longitudinal direction of the workpiece (1) and/or **in that** the bearing element (16) and/or the application element (2) can be moved toward the surface of the workpiece (1).

3. Apparatus according to either of the preceding claims, wherein the bearing element (16) and/or the application element (2) can be pressed against the workpiece (1) by means of a pressure device (5).

4. Apparatus according to any of the preceding claims, wherein the application element (2) is mounted on the bearing element (16) by means of a bearing device (11, 12, 13), in particular by means of a sliding bearing (13) or roller bearing (11, 12) or a bearing sleeve (13).

5. Apparatus according to any of the preceding claims, wherein the application element (2) is arranged on the bearing element (16) so as to be radially adjustable with respect to the axis of rotation (21).

## Revendications

1. Dispositif de revêtement de friction sur la surface d'une pièce (1), avec un bâti de machine (3), au niveau duquel un élément de palier (16) est monté de manière à pouvoir tourner autour d'un axe de rotation (21), lequel peut être déplacé par rapport à la pièce (1) montée au niveau du bâti de machine (3), dans lequel est disposé au niveau de l'élément de palier (16) de manière excentrique par rapport à son axe de rotation (21) un élément applicateur (2) constitué d'un matériau de revêtement, lequel peut être déplacé en contact avec la surface de la pièce (1),
dans lequel l'élément applicateur (2) est réalisé en forme de fil et est maintenu au niveau de l'élément de palier (16) de manière à pouvoir coulisser longitudinalement au moyen d'un dispositif de rapprochement,
**caractérisé en ce que** l'élément applicateur (2) est stocké sur un élément de stockage, relié à l'élément de palier (16), sous la forme d'un rouleau de fil et est réalisé de préférence de manière à pouvoir être suivi en continu.

2. Dispositif selon la revendication 1, **caractérisé en ce que** l'élément de palier (16) et la pièce (1) peuvent être déplacés dans une direction longitudinale de la pièce (1) l'un par rapport à l'autre, et/ou que l'élément de palier (16) et/ou l'élément applicateur (2) peuvent être déplacés en direction de la surface de la pièce (1).

3. Dispositif selon l'une quelconque des revendications précédentes, dans lequel l'élément de palier (16) et/ou l'élément applicateur (2) peuvent être pressés contre la pièce (1) au moyen d'un système sous pression (5).

4. Dispositif selon l'une quelconque des revendications précédentes, dans lequel l'élément applicateur (2) est monté au moyen d'un dispositif de palier (11, 12, 13), en particulier au moyen d'un palier lisse (13) ou d'un roulement à billes (11, 12) ou d'une douille-palier (13), au niveau de l'élément de palier (16).

5. Dispositif selon l'une quelconque des revendications précédentes, dans lequel l'élément applicateur (2) est disposé au niveau de l'élément de palier (16) de manière à pouvoir être ajusté radialement par rapport à l'axe de rotation (21).
